# DEMANDE DE BREVET EUROPEEN

(11) **EP 1 243 909 A1**
(43) Date de publication de la demande: **25.09.2002**
(21) Numéro de dépôt: 02005089.4
(22) Date de dépôt: 07.03.2002
(51) Int. Cl.: G01N 1/24

(54) **Ligne de prélèvement d'échantillons d'effluents gazeux chauds en émission diffuse**

(30) Priorité: 19.03.2001 FR 0103658
(71) Demandeur: LECES, 57280 Maizières-lès-Metz (FR)
(72) Inventeur: Chaucherie, Xavier, 57000 Metz (FR); Wallrich, Jean, 57 310 Guenange (FR); Ruiu, Michel, 57185 Clouange (FR)
(74) Mandataire: Ventavoli, Roger

(57) **Abrégé**

Cette ligne, permettant l'extraction, depuis des fumées chaudes émises en milieu diffus, d'un élément polluant gazeux, tel que des dioxines ou furanes, des HAP ou des métaux lourds, par piégeage sous contrainte d'un fonctionnement normalisé à une température n'excédant pas 20°C, en vue de mesurer la concentration dudit élément polluant, comprend :
- un caisson isotherme étanche (1) destiné à être placé au sein des effluents à analyser et pourvu d'une tête filtrante de prélèvement multidirectionnelle externe et abritant une unité de prélèvement (2) comprenant l'unité de piégeage (3), ladite unité de prélèvement étant refroidie au moyen d'un circuit de circulation d'air,
- un dispositif autonome (6) générateur d'air frais à partir d'une source d'air comprimé présente sur site,
- un conduit calorifugé (8) permettant de transporter l'air froid du dispositif autonome vers le caisson isotherme et le circuit de circulation d'air de refroidissement dont est munie son unité de prélèvement (2).

Application aux "baghouse" et aux lanterneaux en milieu industriel, en particulier en milieu sidérurgique.

## Description

La présente invention concerne le prélèvement d'échantillons de fumées chaudes en émission diffuse en vue d'analyser leur teneur en éléments polluants atmosphériques, comme les dioxines et furanes, les hydrocarbures aromatiques polycycliques (HAP), ou encore les métaux lourds.

Par "fumées" ou "effluents gazeux", on entend ici aussi bien que les émissions de gaz nu, que celles chargées de fines particules solides en suspension

Le contrôle des émissions de fumées diffuses a toujours été problématique, car ces effluents ne sont pas canalisés. C'est le cas par exemple des fumées traitées dans les dépoussiéreurs à manches filtrantes, habituellement appelés "baghouses", qui sont largement utilisés dans le monde industriel, en particulier dans les industries sidérurgiques, et notamment dans les installations de fours électriques.

Dans ce type de dépoussiéreur, la filtration s'effectue dans une enceinte (baghouse) contenant les manches filtrantes. Les effluents gazeux à dépoussiérer, produits auparavant dans le réacteur métallurgique en amont puis brûlés dans une chambre de combustion, arrivent par l'intérieur des manches et les gaz épurés se mélangent à l'air ambiant aspiré par convection, puis sont dirigés vers le sommet du dépoussiéreur (le plénum) avant d'être rejetés à l'atmosphère sous forme d'émissions diffuses. Au niveau du plénum, compte tenu de la dilution apportée par l'air ambiant, la température des fumées est toujours inférieure à 200°C. Néanmoins, cette température reste élevée, entre 60 et 120°C sur la plupart des installations.

Les filtres à manches assurent la rétention de particules solides ou des aérosols condensables à la température de sortie des fumées. En revanche, ils ne retiennent pas les espèces gazeuses à cette température. Il est donc indispensable d'effectuer régulièrement des mesures de la concentration des éventuels éléments polluants contenus dans les fumées diffuses au niveau du plénum du dépoussiéreur, afin de s'assurer que ces fumées peuvent être rejetées à l'atmosphère sans risque pour la qualité de l'air extérieur.

Il est connu de contrôler les rejets polluants dans des fumées qui circulent canalisées dans des conduites en piquant sur ces dernières un tube de petit diamètre qui détourne un échantillon d'analyse vers une centrale de piégeage spécifique de l'élément polluant dont on veut contrôler la concentration.

Par exemple, lorsqu'il s'agit de contrôler la présence de dioxines, de furanes, ou de HAP, dans les fumées d'aciéries électriques, il est connu de faire passer l'échantillon d'analyse prélevé de ces fumées dans une cartouche d'adsorption remplie de résine grenue connue sous la marque XAD2 ®. De même, lorsqu'il s'agit de contrôler la présence de métaux lourds du type plomb, cadmium, etc..., il est connu de faire passer l'échantillon d'analyse prélevé au travers de flacons de barbotage successifs remplis d'un solvant du métal lourd recherché.

La contrainte imposée par la législation pour ce type de piégeage (norme européenne 1948-EN pour la mesure des dioxines ou furanes et norme française XP X 43-329 pour la mesure des HAP) consiste principalement dans l'obligation de fonctionner à une température inférieure ou égale à 20°C. Ces centrales de piégeage sont donc aujourd'hui bien adaptées aux installations qui émettent leurs effluents gazeux vers l'atmosphère en milieu confiné au travers d'un circuit canalisé. Il est aisé dans ce cas en effet de prévoir un piquage de prélèvement des échantillons d'analyse à l'aide d'une conduite refroidie qui abaisse la température de l'échantillon jusqu'au niveau voulu avant piégeage des éléments polluants recherchés. Mais, un grand nombre d'installations industrielles sont génératrices de fumées chaudes diffuses, pour lesquelles donc les pratiques de prélèvement en milieu canalisé évoquées auparavant sont inutilisables.

Le but de la présente invention est précisément de proposer une technique de prélèvement d'échantillons d'analyse d'effluents gazeux chauds en émission diffuse par piégeage du ou des éléments à contrôler à basse température conforme aux normes imposées.

En d'autres termes, il s'agit de pouvoir réaliser un prélèvement d'échantillons gazeux "in situ", c'est-à-dire au sein même des fumées chaudes en émission diffuse à inspecter, en respectant la contrainte de baisser rapidement en dessous de 20°C la température de l'échantillon de fumées prélevé.

A cet effet, l'invention a pour objet une ligne de prélèvement d'un échantillon gazeux représentatif d'effluents gazeux chauds en émission diffuse susceptible de contenir un élément polluant à doser, notamment du type dioxines ou furanes, ou du type hydrocarbures aromatiques ou métaux lourds, par extraction à basse température de cet élément polluant contenu dans l'échantillon, caractérisée en ce qu'elle comprend:
- un caisson isotherme étanche, destiné à être placé au sein desdits effluents gazeux chauds, et qui abrite une unité de prélèvement comprenant un étage d'extraction par piégeage relié, en amont, à une tête de prélèvement multidirectionnelle dudit échantillon montée extérieurement sur ledit caisson, et, en aval, à des moyens d'aspiration sous débit contrôlé, ladite unité de prélèvement étant pourvue d'un circuit de circulation d'un fluide de refroidissement propre alimenté en air frais par
- un générateur autonome d'air froid à partir d'une source d'air comprimé, et
- un flexible calorifugé permettant de transporter l'air froid produit par ledit générateur autonome vers le circuit de refroidissement propre de ladite unité de prélèvement.

De préférence, le caisson lui-même est parcouru intérieurement par un courant d'air frais et présente à cet effet une ouverture d'admission en paroi connectable au flexible calorifugé d'amenée d'air frais depuis le générateur autonome.

Selon d'autres caractéristiques avantageuses de l'invention, spécifiques du piégeage des dioxines et furanes, et des HAP, l'unité de prélèvement est constitué, et dans cet ordre dans le sens de circulation de l'échantillon d'analyse prélevé, d'un filtre placé au niveau de la tête de prélèvement multidirectionnelle et destiné à retenir les particules solides ténues en suspension dans les effluents, d'une verrerie constituée par un étage de condensation pour éliminer les vapeurs d'espèces condensables en dessous de 20°C, et par l'étage de piégeage par adsorption sur une résine spécifique, cette verrerie étant une verrerie classique de laboratoire de chimie à double enveloppe ménageant ainsi dans l'intervalle un circuit de refroidissement par circulation d'air apporté par le générateur d'air frais autonome;

Conformément à une autre variante de réalisation, adaptée au piégeage des métaux lourds, l'étage de piégeage est constitué par une batterie de récipients de barbotage en série remplis d'un solvant de l'élément polluant à analyser.

Selon une variante préférée de réalisation, le flexible calorifugé d'amenée d'air frais est composé d'un tube en polymère souple réticulé gainé par un isolant à structure cellulaire fermée à base de caoutchouc synthétique, par exemple une enveloppe en mousse de polyuréthane;

L'invention sera bien comprise et d'autres aspects et avantages ressortiront plus clairement au vu de la description qui suit, donnée à titre d'exemple de réalisation et en référence aux planches de dessins annexés, sur lesquelles:
- la figure 1 est une vue schématique de la ligne de prélèvement selon l'invention;
- la figure 2 est une vue plus détaillée du caisson isotherme dont l'équipement intérieur est adapté au piégeage des dioxines, des furanes, ou des HAP;
- la figure 3 est une vue générale décrivant un exemple d'implantation de la ligne de prélèvement selon l'invention dans le baghouse d'un dépoussiéreur à manches d'aciérie électrique.

L'invention repose d'abord sur une constatation: la faible vitesse d'écoulement des fumées dans les plénums des dépoussiéreurs à manches et la faible granulométrie des poussières de rejet (inférieure à 5 µm) permettent, voire imposent pour des raisons de représentativité de l'échantillon d'analyse à prélever, un prélèvement pluridirectionnel "in situ" c'est-à-dire au sein même de la zone d'émission des fumées chaudes, lesquelles, bien souvent, affichent une température dépassant les 100°C. Dans ces conditions, il est nécessaire d'assurer très rapidement le refroidissement en dessous de 20°C de l'échantillon prélevé, afin de se conformer aux normes dans ce domaine. Conformément à une caractéristique essentielle de l'invention, une telle vitesse de refroidissement est assurée par insufflation d'air froid, et cet air froid est produit ailleurs, dans un générateur autonome, à partir d'une source d'air comprimé quelconque, dont on sait qu'elles sont toujours présentes et en nombre dans les usines.

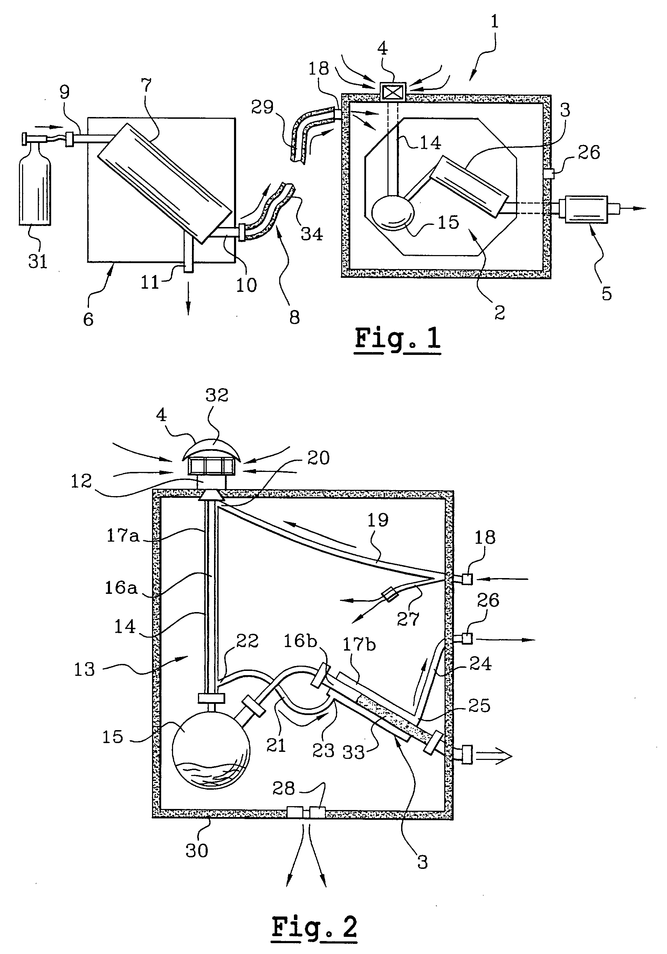

Ainsi, comme on peut le voir sur la figure 1, le dispositif selon l'invention est constitué par:
- un caisson isotherme étanche 1 calorifugé par une couche d'isolant thermique 30, qui peut être une mousse de céramique de quelques centimètres d'épaisseur, et comportant une porte d'accès en façade. Ce caisson abrite une unité de prélèvement 2 comprenant un étage de piégeage 3, relié en amont à une tête de prélèvement multidirectionnelle à filtre 4 montée extérieurement sur le dessus du caisson, et en aval à des moyens d'aspiration 5, ladite unité de prélèvement 2 étant refroidie à l'air en circulation forcée dans un circuit de refroidissement dont elle est pourvue (non représenté sur cette figure);
- un générateur d'air de refroidissement autonome 6 permettant la génération d'air froid à partir d'air comprimé;
- un flexible calorifugé 8 permettant de transporter l'air froid produit par le générateur autonome 6 vers le circuit de refroidissement dont est pourvue l'unité de prélèvement 2.

Le générateur autonome d'air froid 6 est constitué par un boîtier contenant une ligne-Vortex 7 comprenant, de manière connue, un filtre déshuileur et déshumidificateur, un régulateur de pression et un tube-Vortex muni d'un silencieux. Un tel équipement, que l'on trouve dans le commerce, permet de générer de l'air froid à partir d'une source d'air comprimé. Le boîtier abritant la ligne Vortex est muni d'une tubulure d'entrée 9 reliable à une source d'air comprimé quelconque 31 disponible à proximité. Elle est également munie d'une tubulure 10 de sortie d'air frais et d'une tubulure 11 de sortie d'air chaud résiduel. La tubulure de sortie d'air frais 10 est destinée à être connectée au flexible calorifugé 8 dans le but de transporter l'air froid produit jusqu'au circuit de refroidissement dont est pourvue la verrerie constitutive de l'unité de prélèvement 2. Une seconde tubulure de sortie 11 rejette dans le milieu extérieur ambiant un courant résiduel d'air chaud généré par la ligne Vortex. Un tel générateur 6 est capable de produire, sous un débit de plusieurs dizaines de litres par seconde, un courant d'air frais à partir d'une source d'air comprimé standard, de quelques bars de pression (4 ou 5 bars par exemple), et ce avec une température abaissée de plus de 40 °C par rapport à la température de la source d'air comprimé.

Dans l'exemple de réalisation représenté sur la figure 2, et adapté à l'extraction des dioxines (ou des furanes ou des HAP) contenues dans les fumées, l'unité de prélèvement est constituée, pris dans cet ordre et connectés en série les uns à la suite des autres, par:
- un étage de séparation solide/gaz 12 constitué par un filtre plan en fibre de verre destiné à retenir les espèces particulaires ténues éventuellement présentes en suspension dans les fumées au niveau de la tête de prélèvement multidirectionnelle extérieure 4,
- une verrerie de laboratoire 13 refroidie par circulation forcée d'air frais, constituée par un étage de séparation liquide/gaz 14, de préférence une colonne de condensation, pour éliminer les vapeurs d'espèces condensables autour de 20°C et les récupérer dans un récipient 15 situé à la base de ladite colonne, et par l'étage de piégeage 3 relié, d'un côté, à la sortie de la colonne de condensation 14, et de l'autre, à l'unité d'aspiration 5.

La tête de prélèvement multidirectionnelle 4 est équipée de préférence d'une section de prélèvement annulaire sans limite de coupure coiffée par un dôme de protection 32

Dans cet exemple de réalisation, l'étage de piégeage 3 est une cartouche porte-résine contenant une quantité déterminée de résine granulaire 33 d'adsorption des dioxines(et des HAP), par exemple la résine connue dans le commerce sous la marque XAD2®.

L'étage de piégeage 3 est interchangeable. Pour l'approprier au piégeage des métaux lourds du type plomb, cadmium, etc..., la cartouche porte-résine est remplacée par une batterie de récipients de barbotage montés en série les uns à la suite des autres et remplis chacun d'un solvant du métal lourd à extraire pour l'analyse.

Comme déjà dit, la circulation d'air de refroidissement est rendue possible en utilisant une verrerie à double enveloppe classique ménageant ainsi un espace intérieur réservé au traitement de l'échantillon prélevé et une région périphérique enveloppante formant le circuit de refroidissement. Plus précisément, comme on le voit sur la figure 2, la colonne de condensation 14 à double enveloppe ménage ainsi un passage central 16a pour l'échantillon de fumée prélevé, et, autour de ce passage, un espace périphérique 17a de circulation forcée d'air de refroidissement. De même, l'étage de piégeage 3 est constitué par une cartouche porte-résine 16b et d'une enveloppe périphérique 17b délimitant avec le porte-cartouche un espace fermé de circulation pour l'air de refroidissement.

Le caisson isotherme 1 est muni d'une ouverture pariétale 18 d'entrée d'air de refroidissement produit par le générateur 6, reliée à une conduite de liaison 19 permettant de transporter cet air de refroidissement jusqu'à l'extrémité d'entrée haute 20 de l'enveloppe de refroidissement 17a du condenseur 14. Une autre conduite de liaison 21 relie ensuite l'autre extrémité de sortie basse 22 de l'enveloppe 17a à l'extrémité d'entrée 23 de l'enveloppe périphérique 17b de l'unité de piégeage 3. Enfin, une troisième conduite de liaison 24 relie l'extrémité de sortie 25 de l'enveloppe périphérique 17b de l'unité de piégeage 3, à une tubulure 26 de sortie de l'air de refroidissement montée en paroi latérale du caisson 1. Dans ce type de montage, l'air de refroidissement circule donc en co-courant avec l'échantillon prélevé.

De préférence, la conduite souple 19 est munie d'une dérivation 27 débouchant librement à l'intérieur du caisson isotherme 1. Cette disposition permet d'envoyer une partie de l'air frais produit par le générateur distant 6 à l'intérieur du caisson. Une petite ouverture pariétale calibrée 28 est prévue sur celui-ci pour permettre une circulation d'air frais à l'intérieur du caisson tout en le maintenant en légère surpression, favorable à une meilleure étanchéité vis a vis du milieu extérieur ambiant. L'expérience montre que l'équilibre thermique est dans ce cas rapidement atteint entre l'enceinte du caisson et l'air de refroidissement de la verrerie, favorisant ainsi l'obtention encore plus rapide de la basse température recherchée pour l'échantillon gazeux aspiré dans l'appareil.

Les moyens d'aspiration 5, situés à l'extérieur du caisson isotherme 1, sont classiquement composés par une pompe associée à un compteur volumétrique qui fournit en permanence la quantité de gaz prélevé en aspiration continue par la tête de prélèvement 4.

Le flexible calorifugé 8 est composé d'un tube en polymère souple réticulé 29 d'un centimètre de diamètre intérieur environ, gainé par une enveloppe isolante 34 en mousse de polyuréthane de deux centimètres d'épaisseur environ. Un tel flexible permet de transporter l'air froid produit par le générateur autonome 6 avec une très faible perte thermique, à savoir de l'ordre de 1°C par 10 m de flexible.

Le fonctionnement du dispositif selon l'invention est le suivant.

Le caisson isotherme 1 est placé dans la zone de dégagement des fumées chaudes à analyser. Un échantillon de fumée est prélevé par la tête multidirectionnelle 4 par aspiration continue à l'aide des moyens d'aspiration 5. La fumée ainsi aspirée traverse le filtre plan 12 qui piège les fines poussières en suspension. Débarrassé de sa fraction solide, le courant gazeux pénètre dans la colonne de condensation 14 refroidie à l'air. Sa température baisse alors rapidement en dessous des 20°C recherchés et ce malgré l'enthalpie libérée par le passage des vapeurs en phase liquide. Les espèces condensables à cette température sont alors condensées et la phase liquide produite est recueillie par écoulement dans un récipient 15 à la base de la colonne. Les gaz, débarrassés des espèces condensables, sont alors dirigés vers l'unité de piégeage 3 pour y piéger l'élément polluant à doser.

La durée de cette opération est de l'ordre de une à deux heures, selon le débit d'aspiration des fumées et la nature de l'élément polluant à piéger. Puis, le caisson isotherme 1 est retiré de la zone des fumées. Le filtre 12, le ballon 15 de récupération des condensats et l'unité de piégeage 3 sont alors récupérés et envoyés pour analyse.. Le rapprochement avec le volume de fumée prélevée fourni par le débitmètre permet alors de déduire la concentration de cet élément polluant dans les fumées.

Comme déjà signalé, dans l'exemple de réalisation représenté, la circulation de l'air de refroidissement se fait dans le même sens que la circulation de l'échantillon gazeux prélevé. En variante, la circulation d'air frais peut se faire en contre-courant de l'échantillon de fumée prélevé. Pour cela, il suffit de connecter le flexible 8 à la tubulure 26, et de réserver la tubulure 18 à la sortie de l'air de refroidissement.

Les avantages du dispositif selon l'invention sont multiples.

Il est d'abord polyvalent dans ses utilisations. Par simple substitution du capteur dans le caisson, cette ligne de prélèvement permet, sur la base du même principe de traitement, l'extraction de métaux lourds par mise en place de solutions de barbotage dont la température maintenue entre 15 et 20°C procure une absorption maximale.

Par ailleurs, l'air de refroidissement étant généré à partir d'air comprimé, l'appareil selon l'invention est utilisable dans tout milieu industriel, car il existe toujours une source d'air comprimé dans les sites industriels.

La ligne Vortex se caractérise par un faible encombrement et une légèreté qui favorisent la souplesse d'utilisation de l'appareil, sa portabilité et donc la rapidité d'intervention sur le terrain.

Le flexible calorifugé 8 est un élément léger, souple et robuste. Le caisson isotherme 1, dont les dimensions peuvent être par exemple de 80 cm x 80 cm et de 20 cm de profondeur, est peu encombrant et aisément transportable à main d'homme, ce qui permet une grande latitude d'utilisation, du contrôle des rejets de fumées diffuses aux contrôles des atmosphères de travail.

L'introduction d'air frais à l'intérieur du caisson par l'intermédiaire de la dérivation ouverte 27 permet de mettre ledit caisson en légère surpression pendant la durée du prélèvement, ce qui empêche toute pénétration de particules solides à l'intérieur.

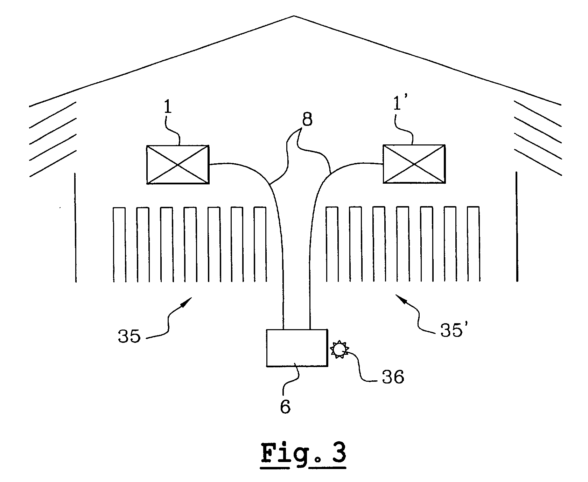

Ainsi, comme on le voit sur la figure 3, il est aisé de placer des caissons isothermes 1, 1' au niveau de chacune des. batteries 35, 35' de filtres à manches dont sont munis les "baghouse" des dépoussiéreurs d'aciéries électriques. Chaque caisson est connecté au moyen du flexible 8 à un générateur d'air frais distant 6, disposé à proximité d'une source d'air comprimée 36 disponible quelque part sur le site d'intervention.

Selon le débit en air froid produit par le générateur 6, il est possible, comme représenté, de relier celui-ci à plusieurs caissons isothermes tout en parvenant dans chacun d'eux à abaisser rapidement en dessous des 20°C réglementaires la température des fumées aspirées.

Il va de soi que l'invention ne saurait se limiter aux exemples ci-avant, mais qu'elle s'étend à de multiples variantes et équivalents dans la mesure où est respectée sa définition donnée par les revendications jointes. En particulier, si l'invention a été conçue initialement pour être appliquée aux dioxines, furanes et aux hydrocarbures aromatiques polycycliques, puis aux métaux lourds, sa polyvalence lui permet d'être utilisable également pour d'autres espèces de polluants atmosphériques, connus ou à venir.

## Revendications

1. Ligne de prélèvement d'un échantillon d'analyse représentatif d'effluents gazeux chauds en émission diffuse susceptibles de contenir un élément polluant à doser, notamment du type dioxine, furanes, hydrocarbures aromatiques ou du type métaux lourds, par extraction à basse température de cet élément polluant contenu dans l'échantillon, **caractérisée en ce qu'**elle comprend :
- un caisson isotherme étanche (1), destiné à être placé au sein desdits effluents gazeux chauds, et qui abrite une unité de prélèvement (2) comprenant un étage d'extraction par piégeage (3), relié en amont à une tête multidirectionnelle extérieure (4) de prise dudit échantillon, et en aval à des moyens d'aspiration sous débit contrôlé (5), ladite unité de prélèvement étant refroidie au moyen d'un circuit de circulation d'air frais,
- un générateur autonome (6) d'air froid de refroidissement à partir d'une source d'air comprimée;
- un flexible calorifugé (8) permettant de transporter l'air froid du générateur autonome (6) vers le circuit d'air de refroidissement de ladite unité de prélèvement (3).

2. Ligne de prélèvement selon la revendication 1, destinée au piégeage des dioxines ou furanes, ou des hydrocarbures aromatiques polycycliques, contenus à l'état gazeux dans les effluents à contrôler , **caractérisé en ce que** l'unité de prélèvement (2) est constituée de :
- un filtre (12) destiné à retenir les poussières solides contenues en suspension dans les fumées, au niveau de la prise multidirectionnelle (4),
- une verrerie à double enveloppe (13) refroidie à l'air, comprenant une colonne de condensation (14), pour condenser les espèces condensables et les récupérer dans un récipient (15), suivie par l'étage de piégeage (3) constitué par une cartouche de résine granulaire fixant par adsorption les dioxines et furanes gazeux.

3. Ligne de prélèvement selon la revendication 2, **caractérisée en ce que** des moyens sont prévus pour procurer un refroidissement de l'enceinte intérieure dudit caisson par insufflation d'air frais produit par le générateur autonome.

4. Ligne de prélèvement selon la revendication 1, destinée au piégeage de métaux lourds contenus sous forme vapeur dans les effluents à contrôler, **caractérisée en ce que** l'unité de prélèvement (2) est constituée
- d'un filtre (12) destiné à retenir les poussières solides contenues en suspension dans les fumées, au niveau de la prise multidirectionnelle (4);
- et d'une verrerie à double enveloppe comprenant une batterie de récipients de barbotage remplis chacun d'un solvant du métal lourd à piéger.

5. Ligne de prélèvement selon la revendication 1, **caractérisé en ce que** le flexible calorifugé (8) est composé d'un tube en polymère souple réticulé (29) gainé par un isolant (34) à structure cellulaire formée à base de caoutchouc synthétique.

6. Ligne de prélèvement selon la revendication 2, **caractérisé en ce que** le caisson isotherme (1) est muni d'une tubulure (18) de connexion du flexible (8) à l'une des extrémités de la double enveloppe (16b, 17b) de la verrerie (13), et d'une tubulure (26) de sortie reliée à l'autre extrémité.
